# EUROPÄISCHE PATENTSCHRIFT

(11) **EP 0 524 425 B1**
(45) Veröffentlichungstag und Bekanntmachung des Hinweises auf die Patenterteilung: **21.08.1996**
(21) Anmeldenummer: 92110135.8
(22) Anmeldetag: 16.06.1992
(51) Int. Cl.: H02H 9/00

(54) **Schaltungsanordnung zur Einschaltstrombegrenzung und zum Überspannungsschutz bei getakteten Stromversorgungsgeräten**
Circuit arrangement for limiting the inrush current and overvoltage protection for switching mode current supply devices
Arrangement de circuit pour limiter le courant lors de la fermeture du circuit et pour la protection contre surtension pour dispositif d'alimentation à découpage

(30) Priorität: 26.06.1991 EP 91110593
(43) Veröffentlichungstag der Anmeldung: 27.01.1993
(73) Patentinhaber: SIEMENS AKTIENGESELLSCHAFT, 80333 München (DE)
(72) Erfinder: Kramer, Karl-Heinz, W-8192 Geretsried (DE)

(56) Entgegenhaltungen:
- EP-A- 0 272 514
- EP-A- 0 350 639
- EP-A- 0 423 885
- IBM TECHNICAL DISCLOSURE BULLETIN Band 32, Nr. 5B, Oktober 1989, Seiten 407,408, New York, US; "Slow Start Circuit"

## Beschreibung

Die Erfindung bezieht sich auf eine wie im Oberbegriff des Patentanspruchs 1 angegebene Schaltungsanordnung zur Einschaltstrombegrenzung und zum Uberspannungsschutz bei getakteten Stromversorgungsgeräten.

Eine derartige Schaltungsanordnung ist bereits aus der EP 0 272 514 Al bekannt.

Getaktete Stromversorgungsanordnungen enthalten im allgemeinen im Eingangskreis eine vergleichsweise große Kapazität, üblicherweise gebildet durch einen Elektrolytkondensator. Diese Kapazität dient als niederohmige Quelle für die primärseitigen Pulsströme der Umrichterschaltung und ist, zusammen mit der ihr vorgeschalteten Induktivität eines Rückwirkungssiebes im wesentlichen für die Höhe und Form des Einschaltstromes verantwortlich.

Der Ladestrom, der beim Stecken oder Einschalten des betreffenden Stromversorgungsgerätes in den Speicherkondensator fließt, kann vorgeschaltete Sicherungen zum Auslösen bringen und bei steckbaren Stromversorgungsgeräten die Steckerstifte zerstören, sofern das als Einschub, Einsatz oder steckbare Baugruppe ausgebildete Gerät unter Spannung gesteckt wird.

Andererseits ist es üblich, Stromversorgungsgeräte der eingangs genannten Art einer Prüfung zu unterziehen, bei der das Stromversorgungsgerät an seinem Eingang mit Spannungsimpulsen bestimmter Form und Höhe beaufschlagt wird. Diese Impulse können empfindliche Bauteile wie z.B. Halbleiter zerstören.

Die bekannte Schaltungsanordnung sieht eine Schaltung vor, die sowohl den Einschaltstrom begrenzt als auch einen Schutz gegen Überspannungen am Speicherkondensator gewährleistet. Die Schaltung enthält ein dem Speicherkondensator vorgeschaltetes Stellglied. Dieses Stellglied begrenzt im Moment des Steckens oder Einschaltens des Stromversorgungsgerätes den Eingangsstrom entweder auf Null oder einen wählbaren, für die Lebensdauer der Steckkontakte oder Schalter bei vergleichsweise häufigem Stecken oder Schalten ausreichend niedrigen Wert.

Nach einer wählbaren Zeit begrenzt es den Eingangsstrom auf einen höheren Wert, der einerseits für den Start der Stromversorgungsanordnung ausreichend groß und andererseits im Hinblick auf vorgegebene Einschaltstromforderungen noch zulässig ist. Dieser Wert ist gegebenenfalls so gewählt, daß die zulässige Stecker-Kontaktbelastung im gesteckten Zustand nicht überschritten wird.

Nach erfolgtem Start der Stromversorgung wird das Stellglied so durchgesteuert, daß daran nur möglichst niedrige Verluste entstehen.

Beim Eintreffen eines Überspannungsimpulses und der hierdurch verursachten Stromerhöhung wird die Begrenzung des Stromes auf den höheren Wert wieder wirksam, wodurch sich die kurzzeitige eingangsseitige Spannungserhöhung wegen der Eingangskapazität nur unwesentlich am Eingang der nachfolgenden Stromversorgungsanordnung auswirken kann.

Bei der bekannten Schaltungsanordnung wird in vorteilhafter Weise mit Hilfe ein und desselben Stellgliedes zugleich ein zeitlich gestufter Schutz gegen Überströme und ein wirksamer Schutz gegen Überspannungen erreicht.

Untersuchungen im Rahmen der Erfindung haben allerdings ergeben, daß sich die bekannte Schaltungsanordnung nur dann mit unterschiedlich großen Speisespannungen speisen läßt, wenn der Einsatzpunkt der Strombegrenzung im Hinblick auf die kleinstmögliche Eingangsspannung und den Temperaturgang der Schaltungsanordnung festgesetzt ist und daß der sich so ergebende Wert bei Speisung aus Speisequellen höherer Spannung im Hinblick auf die Bemessung von Sicherungen und daraus resultierenden Leitungsquerschnitten von Nachteil ist. Gelangt hingegen der für große Eingangsspannungen bemessene Grenzwert des maximalen Eingangsstromes in die Nähe des Wertes des statischen Betriebseingangsstromes bei niedrigen Eingangsspannungen, so kann die Strombegrenzung bei niedrigen Eingangsspannungen ungewollt in Funktion treten, stabil in diesem Zustand gefangen bleiben und so eine Betriebsunterbrechung und thermische überlastung des Stellgliedes hervorrufen. Diesen Fall kann man zwar dadurch ausschließen, daß der Grenzwert des maximalen Eingangsstromes weiter erhöht wird. Hierdurch werden die mit der Einschaltstrombegrenzung verbundenen Vorteile jedoch geschmälert.

Aufgabe der Erfindung ist es daher, eine wie im Oberbegriff des Patentanspruchs 1 angegebene Schaltungsanordnung derart auszubilden, daß der für die Begrenzung des Einschaltstromes maßgebliche Grenzwert in einem großen Temperaturbereich selbsttätig an die bei verschiedenen Eingangsspannungen maßgeblichen Erfordernisse angepaßt wird.

Gemäß der Erfindung wird das Stromversorgungsgerät in der im kennzeichnenden Teil des Patentanspruchs 1 angegebenen Weise ausgebildet. Dabei ergibt sich, daß der für die Begrenzung des Einschaltstromes maßgebliche Grenzwert bei größeren Eingangsspannungen kleiner als bei kleinen Eingangsspannungen ist. Der Speicherkondensator ist insbesondere über einen Schalter und/oder Stecker mit der Speisespannungsquelle verbindbar.

Durch die Maßnahmen ergibt sich der Vorteil, daß ein mit der Schaltungsanordnung versehenes Stromversorgungsgerät ohne weiteres aus Speisequellen unterschiedlicher Spannung gespeist werden kann, ohne daß bei der Speisung mit einer vergleichsweise großen Spannung ein unverhältnismäßig großer Einschaltstrom zugelassen zu werden braucht.

Vorteilhafte Ausgestaltungen der Erfindung ergeben sich aus den Unteransprüchen.

Die Weiterbildung der Erfindung nach Anspruch 2 hat den Vorteil, daß bei vergleichsweise kleinem Strommeßwiderstand eine relativ große Spannung am Stromquellenstromzweig des Differenzverstärkers vorgesehen werden kann.

Man kann den vorgegebenen Bruchteil der Eingangsspannung einem der beiden Eingänge des Differenzverstärkers unmittelbar oder über eine Inverterstufe zuführen. Zum Beispiel kann der vorgegebene Bruchteil der Eingangsspannung mit der vorgegebenen Polarität der dem nichtinvertierenden Eingang des Differenzverstärkers zugeführten Referenzspannung überlagert werden.

Die Weiterbildung der Erfindung gemaß Anspruch 3 hat demgegenüber den Vorteil, daß der vorgegebene Bruchteil der Eingangsspannung mit besonders einfachen Mitteln gebildet werden kann, ohne daß eine Invertierung erforderlich ist.

Die weitere Ausgestaltung der Erfindung nach Anspruch 4 sieht ein Verzögerungsglied vor, daß bei Verbinden des entladenen Speicherkondensators mit der Speisespannungsquelle während einer vorgegebenen Verzögerungszeit an seinem Ausgang ein der Feldeffekttransistor sperrendes Potential abgibt. Ein derartiges Verzögerungsglied kann zweckmäßigerweise in der Verbindung der Steuerelektrode des Feldeffekttransistors mit dem Einschaltpotential angeordnet sein.

Die Weiterbildung nach Anspruch 5 hat den Vorteil, daß es bei der Realisierung des Verzögerungsgliedes genügt, den Referenzspannungsgeber durch einen Kondensator zu ergänzen. Außerdem wirken sich Exemplarstreuungen der Gate-Source-Schwellenspannung des Feldeffekttransistors 91 nicht nachteilig auf die zeitliche Verzögerung des Ladestromes aus.

Eine vorteilhafte Ansteuerung des Feldeffekttransistors mit Hilfe des Differenzverstärkers geht aus Anspruch 6 hervor.

Die Maßnahmen nach Anspruch 7 können sich im Hinblick auf die Stabilität des Differenzverstärkers als vorteilhaft erweisen.

Die Weiterbildung nach Anspruch 8 sind im Hinblick auf die dynamische Stabilität der Schaltungsanordnung von Vorteil. Darüberhinaus läßt sich durch entsprechende Bemessung des RC-Gliedes in vorteilhafter Weise eine gewünschte Steilheit der Anstiegsflanke des Einschaltstromimpulses wählen.

Die Erfindung wird anhand des in der Figur dargestellten Ausführungsbeispieles näher erläutert.

Die Figur zeigt eine Schaltungsanordnung zur Einschaltstrombegrenzung und zum Überspannungsschutz bei einem getakteten Stromversorgungsgerät.

Die in der Figur gezeigte Schaltungsanordnung zur Einschaltstrombegrenzung und zum Überspannungsschutz ist zwischen einem Versorgungsnetz bzw. der Versorgungsspannungsquelle 1 und dem Speicherkondensator 92 der Stromversorgungsanordnung 90 angeordnet. Die Schaltungsanordnung zur Einschaltstrombegrenzung und zum Überspannungsschutz ist zusammen mit der zu schützenden Stromversorgungsanordnung in ein und demselben Gerät untergebracht und über die Kontakte 2 eines in der Figur nicht näher dargestellten Vielfachsteckverbinders mit der Versorgungsspannungsquelle 1 verbindbar, die die Speisespannung U_{S} liefert. Der Speicherkondensator 92 ist auf der einen Seite über einen Steckkontakt mit dem Pluspol der Versorgungsspannungsquelle 1 verbunden und auf der anderen Seite über die Drain-Source-Strecke des als Leistungs-MOS-FET ausgebildeten Feldeffekttransistors 91, den dazu in Serie liegenden, als Istwertgeber dienenden Strommeßwiderstand 70 und einen weiteren Kontakt des Vielfachsteckverbinders mit dem Minuspol der Versorgungsspannungsquelle 1 verbunden. Der mit dem Minuspol der Speisespannungsquelle 1 verbundene Anschluß des Strommeßwiderstandes 70 hat das Bezugspotential 0V.

Der Feldeffekttransistor 91 wird durch eine Regelvorrichtung gesteuert, die den Differenzverstärker 6, eine diesem nachgeschaltete Ausgangsschaltung mit den bipolaren Transistor 81 und den Ziehwiderstand 82, 83 enthält.

Das Gate des als Stellglied dienenden Feldeffekttransistors 91 ist einerseits mit dem Kollektor des Transistors 81 verbunden und andererseits über die Serienschaltung der Widerstände 82 und 83 an die Hilfsspannung U_{H} geführt. Zwischen dem Gate und der Source des Feldeffekttransistors 91 liegt der Widerstand 84.

Bei gesperrtem Transistor 81 gelangt die Hilfsspannung U_{H} über die Widerstände 82 und 83 an die Gateelektrode des Feldeffekttransistors 91. Auf diese Weise gelangt Einschaltpotential an die Steuerelektrode, das den Feldeffekttransistor 91 leitend steuert.

Bei gesättigtem Transistor 81 wird die den Feldeffekttransistor 91 öffnende Spannung abgeleitet. Der Feldeffekttransistor 91 ist daher in diesem Betriebszustand gesperrt. Im aktiven Bereich des Transistors 81 wird der Feldeffekttransistor 91 so gesteuert, daß sein Bahnwiderstand die gewünschte Begrenzung des Einschaltstromes bewirkt. Dabei nimmt der Feldeffekttransistor 91 während der kurzen Zeitdauer des Einschaltvorganges Leistung auf.

Der Differenzverstärker 6 enthält die beiden bipolaren Transistoren 62 und 63, deren Emitter unmittelbar miteinander verbunden sind. Die Emitterverbindung der Transistoren 62 und 63 ist über den Widerstand 61 an die Hilfsspannung U_{H} geführt. Die Basis des Transistors 62 liegt am nichtinvertierenden Eingang E+, die Basis des Transistors 63 am invertierenden Eingang E- des Differenzverstärkers 6. Der Kollektor des Transistors 62 ist über eine aus den Widerständen 67 und 68 bestehende, als Arbeitswiderstand dienende Serienschaltung an das Bezugspotential 0 V geführt. Zwischen dem Kollektor des Transistors 63 und dem Bezugspotential 0 V liegt der Widerstand 66. Zwischen den Kollektoren der Transistoren 62 und 63 liegt die aus dem Widerstand 64 und dem Kondensator 65 bestehende Serienschaltung. Diese Serienschaltung 64, 65 bildet ein Zeitglied, das die dynamische Stabilität der Schaltungsanordnung erhöht.

Der Differenzverstäker 6 dient zum Soll-Istwert-Vergleich und teilt - abhängig von den dem nichtinvertierenden Eingang E+ und dem invertierenden Eingang E- zugeführten Spannungen auf die beiden Ausgangsstromzweige 66 bzw. 67, 68 auf. Der Widerstand 66 ist im Hinblick auf Symmetrie und Drift- und Schwellenkompensation zweckmäßig, kann jedoch gegebenenfalls durch einen Kurzschluß ersetzt sein.

Der nichtinvertierende Eingang E+ ist an dem Ausgang des Referenzspannungsgebers 4 angeschlossen. Der Sollwert- oder Referenzspannungsgeber 4 enthält eine auf dem Widerstand 41 und der Z-Diode 42 bestehende, an die Speisespannungsquelle 1 angeschlossene Serienschaltung. Parallel zu der als Referenzelement dienenden Z-Diode 42 liegt der aus dem Widerständen 43 und 44 bestehende Spannungsteiler. Am Abgriff des Spannungsteilers 43, 44 liegt der nichtinvertierende Eingang E+ des Differenzverstärkers 6.

Der invertierende Eingang E- des Differenzverstärkers 6 ist über den Widerstand 94 und den dazu in Serie liegenden Widerstand 72 an den Verbindungspunkt von Strommeßwiderstand 4 und Source des Feldeffekttransistors 11 geführt.

Die Vorrichtung 3 versorgt den Differenzverstärker 6 mit der Hilfsspannung U_{H}.

Die Vorrichtung 3 zur Hilfsspannungserzeugung ist an die Versorgungsspannungsquelle 1 angeschlossen und besteht aus der aus dem Widerstand 31 und der Z-Diode 32 bestehenden Serienschaltung. Die aus der Speisespannung U_{S} gewonnene Hilfsspannung U_{H} steht am Verbindungspunkt des Widerstandes 31 mit der Z-Diode 32 zur Verfügung.

Zwischen dem Verbindungspunkt des Strommeßwiderstandes 70 mit der Source-Elektrode des Feldeffekttransistor 91 und dem Pluspol der Speisespannungsquelle 1 liegt die aus den Widerständen 71 und 72 bestehende Serienschaltung, d.h. ein aus den Widerständen 71 und 72 bestehender Spannungsteiler ist in einem auf den Strommeßwiderstand 70 folgenden Querzweig des Speisestromkreises angeordnet. Die Verbindung der Widerstände 71 und 72 ist über den Widerstand 94 mit dem invertierenden Eingang E- des Differenzverstärkers 6 verbunden. Auf diese Weise gelangt an den invertierenden Eingang E- des Differenzverstärkers 6 zusätzlich zu der am Strommeßwiderstand 70 abfallenden Spannung ein Bruchteil der Speisespannung U_{S}. Die Größe des Bruchteils ist durch das Verhältnis der Werte der Widerstände 71 und 72 vorgegeben. Die Polarität des zugeführten Bruchteils der Speisespannung ist derart, daß der für die Strombegrenzung maßgebliche Grenzwert des Stromes mit wachsender Speisespannung U_{S} sinkt.

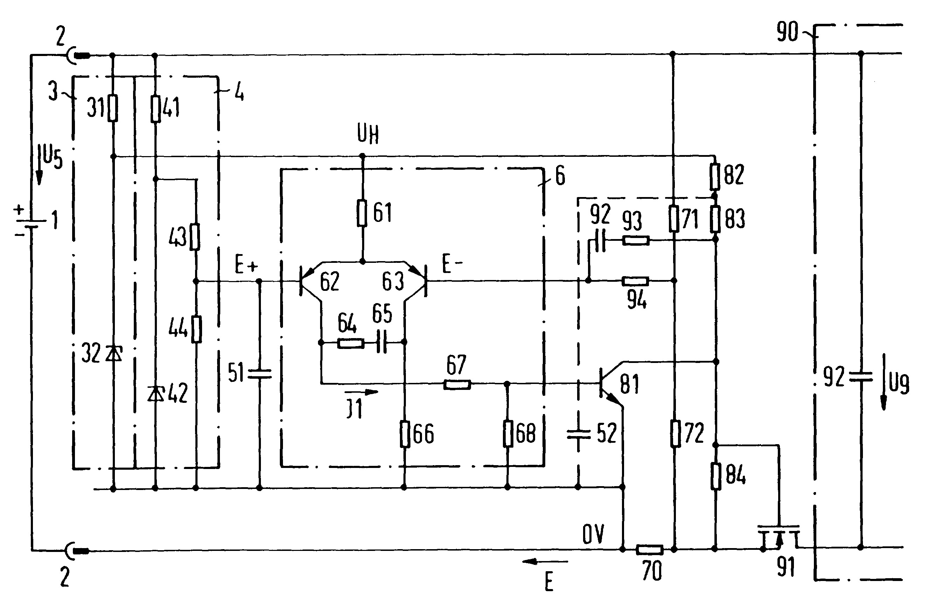

Die in Fig. 1 gezeigte Schaltungsanordnung enthält ferner ein Verzögerungsglied, das bei Verbinden des entladenen Speicherkondensators 92 mit der Speisespannungsquelle 1 während einer vorgegebenen Verzögerungszeit an seinem Ausgang ein den Feldeffekttransistor 91 sperrendes Potential abgibt. Dieses Verzögerungsglied besteht aus dem Widerstand 43 des Referenzspannungsgebers 4, dem Widerstand 44 des Referenzspannungsgebers 4 und dem parallel zum Widerstand 44 angeordneten Kondensator 51. Der Kondensator 51 bewirkt, daß die dem nichtinvertierenden Eingang E+ zugeführte Spannung erst nach einer vorgegebenen Verzögerungszeit den Wert der Referenzspannung annimmt.

Anstelle des Kondensators 51 kann der Kondensator 52 vorgesehen werden. Der Kondensator 52 liegt zwischen dem Verbindungspunkt der Widerstände 82 und 83 und dem Bezugspotential 0 Volt. Der Kondensator 52 bewirkt, daß das den Feldeffekttransistor 91 leitend steuernde Einschaltpotential erst nach einer Verzögerungszeit wirksam wird. Diese Verzögerungszeit ist durch die Zeitkonstante des RC-Gliedes 82, 52 bestimmt. Erst dann, wenn sich der Kondensator 52 auf einen vorgegebenen Teil der Hilfsspannung U_{H} aufgeladen hat, kann der Feldeffekttransistor 91 in den aktiven bzw. stromführenden Zustand überführt werden. Ist kein Kondensator 52 vorgesehen, tritt zweckmäßigerweise ein einziger Widerstand an die Stelle der beiden Widerstände 82 und 83.

Der invertierende Eingang E- des Differenzverstärkers 6 ist über die aus dem Kondensator 92 und Widerstand 93 bestehende Serienschaltung an die Gate-Elektrode des Feldeffekttransistors 91 geführt. Der Widerstand 93 kann gegebenenfalls durch einen Kurzschluß ersetzt sein. Die Widerstände 82, 83 sowie der Kondensator 92 - mit oder ohne Widerstand 93 - dient zur Erhöhung der dynamischen Stabilität im Hinblick darauf, daß nach dem Einschalten der Schaltungsanordnung der Strom auf den definierten Wert springt. Wählt man die Zeitkonstante des RC-Gliedes 92, 82, 83 bzw. 92, 93, 82, 83 um mindestens den Faktor 10 größer als im Hinblick auf die dynamische Stabilität zweckmäßig ist, so tritt an die Stelle eines Stromsprunges ein Anstieg des Ladestromes I_{E} mit vorgegebener Steilheit der Anstiegsflanke.

Wird die Speisespannung U_{S} angelegt, so entsteht praktisch unverzögert die interne Hilfsspannung U_{H}, die die Schaltungsanordnung versorgt und über die Widerstände 82 und 83 den Feldeffekttransistor 91 leitend steuert.

Zu Anfang des Einschaltvorganges hat der Kondensator 51 keine Ladung. Die Spannung am nichtinvertierenden Eingang E + des Differenzverstärkers beträgt 0V. Der Transistor 62 führt den gesamten, durch den Widerstand 61 eingeprägten Strom I1. Der Strom I1 steuert den Transistor 81 leitend und hält dadurch den Transistor 91 zunächst gesperrt.

Zeitverzögert durch die Widerstände 43 und 44 und den Kondensator 51 erscheint am nicht invertierenden Eingang E + des Reglers eine Spannung, die auf den Sollwert ansteigt. Damit verringert sich der durch den Strommeßwiderstand 70 fließende Strom in dem Maße, wie sich die Spannung U1 der Spannung U2 nähert.

Mit kleiner werdendem Strom I1 verringert der Transistor 81 seinen Leitwert. Hierdurch wird der Feldeffekttransistor 91 entsprechend leitend gesteuert. Somit kann ein Eingangsstrom i_{E} fließen, der die große Kapazität des Kondensators 92 des Stromversorgungsgerätes 90 auflädt. Je nach Bemessung der Schaltelemente 92 und 93 springt der Eingangsstrom vom Wert 0 auf einen vorgegebenen festen Wert oder steigt mit vorgegebener Anstiegsflanke auf den vorgegebenen Wert an.

Sobald der Eingangskondensator 92 der Stromversorgungsanordnung 90 geladen und diese in Betrieb ist, sinkt der Strom auf deren statischen Eingangsstrom.

Der Eingangsstrom I_{E} bewirkt am Strommeßwiderstand 70 einen Spannungsabfall, der über den Widerstand 94 die Spannung am invertierenden Eingang E- anhebt. Dadurch kommt es zu einer derartigen Stromverteilung im Differenzverstärker 6, daß die beiden Eingangsspannungen an den Eingängen E+ und E- gleich groß werden.

Dieser Einschaltvorgang ist ein Regelvorgang, bei der Eingangsstrom i1 auf einen durch die Spannung am Eingang E+ bestimmten Maximalwert i₁ₘₐₓ geregelt wird.

Mit Hilfe des Widerstandes 72 wird erreicht, daß dem dem Eingangsstrom proportionalen Spannungsabfall am Strommeßwiderstand 70 ein Teilbetrag der Eingangsspannung U_{S} aufgesetzt wird. Der maximale Istwert iE max ist so in der Weise vom Eingangsstrom und von der Eingangsspannung UE abhängig, daß nach Art einer Störgrößenaufschaltung der maximale Istwert kleiner wird, wenn die Eingangsspannung UE größer wird.

Da sich die Temperaturdrift der Transistoren 62 und 63 bei geeigneter Auswahl und Anordnung der Transistoren weitgehend kompensiert, ergibt sich ein besonders großer Bereich der Umgebungstemperatur, in dem die Schaltungsanordnung zuverlässig arbeitet. Die Streuung der Basis-Emitter-Spannung des Transistors 81 ist für die Ansteuerung des Feldeffekttransistors 91 ohne praktische Bedeutung. Der Maximalwert iE max ist daher ebenfalls von Exemplarstreuungen der Basis-Emitter-Spannung des Transistors 81 unabhängig.

Beim Eintreffen eines Überspannungsimpulses sei die angeschlossene Stromversorgungsanordnung in Betrieb, der Kondensator 51 auf die Begrenzungsspannung aufgeladen, der Verstärker 6 positiv übersteuert und am Ausgang stromlos und damit der MOS-FET 91 niederohmig. Durch den schnellen Spannungsanstieg am Eingang der Schaltungsanordnung bzw. an den Kontakten 2 steigt - bedingt durch die Eingangskapazität der Stromversorgungsanordnung - der Eingangsstrom schnell an, wird jedoch ebenso wie beim Einschalten durch den Differenzverstärker 6 und den MOS-FET 91 auf den festgelegten Wert unverzögert begrenzt.

Durch die strombegrenzende Wirkung der Schaltungsanordnung führen die in Versorgungsnetzen vorkommenden hohen aber kurzen Uberspannungen nur zu einem geringen Anstieg 92 der Spannung am Eingang der Stromversorgungsanordnung 90. Die Spannungsdifferenz liegt am MOS-FET 11 der Schutzschaltung, der für diese Spannung zu bemessen ist. Nach Ende der Überspannung kehrt die Schaltungsanordnung wieder in den Normalzustand mit voll durchgesteuertem MOS-FET 91 zurück.

Beim Auftreten von kurzzeitigen transienten Spannungsimpulsen auf der Eingangsspannung UE bewirkt die strombegrenzende Wirkung der Schaltungsanordnung einen verzögerten, geringen Spannungsanstieg am Speicherkondensator 92 und damit im Primärbereich des Stromversorgungsgerätes 90 und ermöglicht so einen durchlaufenden, ungestörten Betrieb des Stromversorgungsgerätes.

## Patentansprüche

1. Schaltungsanordnung zur Einschaltstrombegrenzung und zum Überspannungsschutz bei getakteten Stromversorgungsgeräten, mit einem Speicherkondensator (92), der eine niederohmige Spannungsquelle für eine daran angeschlossene Stromversorgungsanordnung bildet, wobei zur Begrenzung des in den Speicherkondensator (92) fließenden Ladestromes und zur Begrenzung der am Speicherkondensator (92) auftretenden Ladespannung (U92) in einem zwischen der Speisespannungsquelle (1) und dem Speicherkondensator (92) liegenden Speisestromkreis eine Serienschaltung aus der Source-Drain-Strecke eines Feldeffekttransistors (91) und einem Strommeßwiderstand (70) angeordnet ist und der Ausgang eines an einen Referenzspannungsgeber (4) und an den Strommeßwiderstand (70) angeschlossenen und einen Strombegrenzer bildenden Differenzverstärkers (6) an das Gate des Feldeffekttransistors (91) geführt ist,
**dadurch gekennzeichnet,**
daß einem der beiden Eingänge des Differenzverstärkers (Eingang E-) zusätzlich ein vorgegebener Bruchteil der Spannung der Speisespannungsquelle (1) mit derartiger Polarität zugeführt ist, daß der für die Begrenzung des Ladestromes durch den Feldeffekttransistor (91) maßgebliche Grenzwert des Stromes mit wachsender Speisespannung sinkt.

2. Schaltungsanordnung nach Anspruch 1,
**dadurch gekennzeichnet,**
daß der Differenzverstärker (6), bei dem der Strom eines Stromquellenstromzweiges (61) abhängig von den einem nichtinvertierenden Eingang (E+) und einem invertierenden Eingang (E-) zugeführten Spannungen auf zwei Ausgangsstromzweige (66; 67, 68) aufgeteilt wird, mit den Ausgangsstromzweigen (66; 67, 68) an den den Strommeßwiderstand enthaltenden Strompfad und mit dem Stromquellenstromzweig (61) an eine Hilfsspannung (U_{H}) geführt ist, die die gleiche Polarität wie die Speisespannung (U_{S}) hat, und daß der nichtinvertierende Eingang (E+) an den Referenzspannungsgeber (4) und der invertierende Eingang (E-) an den Strommeßwiderstand (70) und eine Quelle (1, 71, 72) für den vorgegebenen Bruchteil der Spannung der Speisespannungsquelle (1) angeschlossen ist.

3. Schaltungsanordnung nach Anspruch 2,
**dadurch gekennzeichnet,**
daß in einem im Speisestromkreis auf den Strommeßwiderstand (70) folgenden Querzweig ein Spannungsteiler (71, 72) angeordnet ist, dessen Abgriff an den invertierenden Eingang (E-) des Differenzverstärkers (6) geführt ist.

4. Schaltungsanordnung nach einem der Ansprüche 1 bis 3,
**dadurch gekennzeichnet,**
die Schaltungsanordnung ein Verzögerungsglied (43, 51 bzw. 82, 52) enthält, das bei Verbinden des entladenen Speicherkondensators (92) mit der Speisespannungsquelle (1) während einer vorgegebenen Verzögerungszeit an seinem Ausgang ein den Feldeffekttransistor (91) sperrendes Potential abgibt.

5. Schaltungsanordnung nach Anspruch 4,
**dadurch gekennzeichnet,**
daß das Verzögerungsglied und der Referenzspannungsgeber (4) durch einen an eine Konstantspannungsquelle (41, 42) angeschlossenen Spannungsteiler (43, 44) und einen parallel zu einem Widerstand (44) des Spannungsteilers liegenden Kondensator (51) gebildet ist.

6. Schaltungsanordnung nach einem der Ansprüche 2 bis 5,
**dadurch gekennzeichnet,**
daß der Differenzverstärker (6) zwei bipolare Transistoren (62, 63) enthält, deren unmittelbar miteinander verbundene Emitter über einen den Stromquellenzweipol bildenden Widerstand (61) an die Hilfsspannung geführt sind, und daß an den Kollektorstromzweig des am nichtinvertierenden Eingang (E+) liegenden Transistors (62) die Basis eines bipolaren Transistors (81) angeschlossen ist, dessen Emitter-Kollektor-Strecke die über einen Widerstandsstromzweig an ein Einschaltpotential geführte Gate-Elektrode des Feldeffekttransistors (91) mit dem Bezugspotential verbindet.

7. Schaltungsanordnung nach Anspruch 6,
**dadurch gekennzeichnet,**
daß die Kollektoren der beiden Transistoren (62, 63) des Differenzverstärkers (6) über eine RC-Serienschaltung (64, 65) miteinander verbunden sind.

8. Schaltungsanordnung nach den Ansprüchen 3 und 6,
**dadurch gekennzeichnet,**
daß der invertierende Eingang (E-) des Differenzverstärkers (6) über einen Kondensator (92) an die Gate-Elektrode des Feldeffektransistors (91) geführt ist und daß zwischen dem invertierenden Eingang (E-) und dem Abgriff des im Querzweig des Speisestromkreises liegenden Spannungsteilers (71, 72) ein Widerstand (94) angeordnet ist.

## Claims

1. Circuit arrangement for limiting the inrush current and for overvoltage protection in switched-mode power supply devices, having a storage capacitor (92) which forms a low-impedance voltage source for a power supply arrangement connected thereto, in which case, for the purpose of limiting the charging current flowing into the storage capacitor (92) and for the purpose of limiting the charging voltage (U92) occurring across the storage capacitor (92), a series circuit formed by the source-drain path of a field-effect transistor (91) and a current measuring resistor (70) is arranged in a supply circuit situated between the supply voltage source (1) and the storage capacitor (92), and the output of a differential amplifier (6), which is connected to a reference voltage transmitter (4) and to the current measuring resistor (70) and forms a current limiter, is routed to the gate of the field-effect transistor (91), characterized in that one of the two inputs of the differential amplifier (input E-) is additionally supplied with a predetermined fraction of the voltage of the supply voltage source (1) with a polarity such that the limit value, of the current, which is critical for limiting the charging current through the field-effect transistor (91) decreases as the supply voltage increases.

2. Circuit arrangement according to Claim 1, characterized in that the differential amplifier (6), in which the current of a current source current path (61) is divided between two output current paths (66; 67, 68) as a function of the voltages fed to a non-inverting input (E+) and to an inverting input (E-), has its output current paths (66; 67, 68) routed to the current path containing the current measuring resistor, and has its current source current path (61) routed to an auxiliary voltage (U_{H}) which has the same polarity as the supply voltage (U_{S}), and in that the non-inverting input (E+) is connected to the reference voltage transmitter (4) and the inverting input (E-) is connected to the current measuring resistor (70) and a source (1, 71, 72) for the predetermined fraction of the voltage of the supply voltage source (1).

3. Circuit arrangement according to Claim 2, characterized in that a voltage divider (71, 72) is arranged in a shunt path which follows the current measuring resistor (70) in the supply circuit, the tap of which voltage divider is routed to the inverting input (E-) of the differential amplifier (6).

4. Circuit arrangement according to one of Claims 1 to 3, characterized in that the circuit arrangement contains a delay element (43, 51 and 82, 52) which, when the discharged storage capacitor (92) is connected to the supply voltage source (1), emits at its output, for a predetermined delay time, a potential which switches off the field-effect transistor (91).

5. Circuit arrangement according to Claim 4, characterized in that the delay element and the reference voltage transmitter (4) are formed by a voltage divider (43, 44), which is connected to a constant voltage source (41, 42), and a capacitor (51), which is connected in parallel with a resistor (44) of the voltage divider.

6. Circuit arrangement according to one of Claims 2 to 5, characterized in that the differential amplifier (6) contains two bipolar transistors (62, 63) whose emitters, which are connected directly to one another, are routed to the auxiliary voltage via a resistor (61) which forms the current source two-terminal network, and in that the base of a bipolar transistor (81) is connected to the collector current path of the transistor (62) connected to the non-inverting input (E+), the emitter-collector path of which bipolar transistor (81) connects the gate electrode, which is routed to a turn-on potential via a resistive current path, of the field-effect transistor (91) to the reference-earth potential.

7. Circuit arrangement according to Claim 6, characterized in that the collectors of the two transistors (62, 63) of the differential amplifier (6) are connected to one another via an RC series circuit (64, 65).

8. Circuit arrangement according to Claims 3 and 6, characterized in that the inverting input (E-) of the differential amplifier (6) is routed via a capacitor (92) to the gate electrode of the field-effect transistor (91), and in that a resistor (94) is arranged between the inverting input (E-) and the tap of the voltage divider (71, 72) situated in the shunt path of the supply circuit.

## Revendications

1. Montage de limitation du courant lors de la fermeture du circuit et de protection contre les surtensions dans des appareils d'alimentation à découpage, comportant un condensateur (92) de stockage, qui forme une source de tension basse impédance pour un dispositif d'alimentation en courant qui lui est connecté, un circuit-série constitué de la voie source-drain d'un transistor (91) à effet de champ et d'une résistance (70) de mesure du courant étant disposée, afin de limiter le courant de charge passant dans le condensateur (92) de stockage et de limiter la tension (U92) de charge apparaissant aux bornes du condensateur (92) de charge, dans un circuit de courant d'alimentation se trouvant entre la source (1) de tension d'alimentation et le condensateur (92) de stockage et la sortie d'un amplificateur (6) différentiel connecté à un générateur (4) de tension de référence et à la résistance (70) de mesure du courant et formant un limiteur de courant est connectée à la grille du transistor (91) à effet de champ,
caractérisé en ce que
une fraction prescrite de la tension de la source (1) de tension de la source (1) de tension d'alimentation ayant une polarité telle que la valeur limite du courant, déterminante pour la limitation du courant de charge passant dans le transistor (91) à effet de champ, baisse lorsque la tension d'alimentation croît, est appliquée en supplément à l'une des deux entrées de l'amplificateur différentiel (entrée E-).

2. Montage suivant la revendication 1,
caractérisé en ce que
l'amplificateur différentiel (6), dans lequel le courant d'une branche (61) de source de courant est partagé, en fonction des tensions appliquées à une entrée non inverseuse (E+) et à une entrée inverseuse entre deux branches (66 ; 67, 68) de courant de sortie, est relié, par les branches (66 ; 67, 68) du courant de sortie, au chemin du courant contenant la résistance de mesure du courant et par la branche (61) de source de courant à une tension auxiliaire (U_{H}), qui a la même polarité que la tension (U_{S}) d'alimentation et l'entrée (E+) non inverseuse est connectée au générateur (4) de tension de référence, l'entrée inverseuse (E-) est connectée à la résistance (70) de mesure du courant et à une source (1, 71, 72) pour la fraction prescrite de la tension de la source (1) de tension d'alimentation.

3. Montage suivant la revendication 2,
caractérisé en ce que
un diviseur (71, 72) de tension, dont la prise de prélèvement est reliée à l'entrée inverseuse (E-) de l'amplificateur différentiel (6), est disposé dans une branche transversale se trouvant, dans le circuit de courant d'alimentation, en aval de la résistance (70) de mesure du courant.

4. Montage suivant l'une des revendications 1 à 3,
caractérisé en ce que
le montage comprend un élément (43, 51 ou 82, 52) de retardement, qui fournit, lors de la liaison du condensateur (92) de stockage déchargé avec la source (1) de tension d'alimentation, pendant une durée de retard prescrite à sa sortie un potentiel bloquant le transistor (91) à effet de champ.

5. Montage suivant la revendication 4,
caractérisé en ce que
l'élément de retardement et le générateur (4) de tension de référence sont formés d'un diviseur (43, 44) de tension connecté à une source (41, 42) de tension constante et d'un condensateur (51) se trouvant en parallèle avec une résistance (44) du diviseur de tension.

6. Montage suivant l'une des revendications 2 à 5,
caractérisé en ce que
l'amplificateur différentiel (6) comprend deux transistors bipolaires (62, 63), dont les émetteurs reliés directement entre eux sont reliés par l'intermédiaire d'une résistance (61) formant le dipôle de source de courant à la tension auxiliaire et il est connecté à la branche de courant de collecteur du transistor (62) se trouvant à l'entrée non inverseuse (E+) la base d'un transistor bipolaire (81), dont la voie émetteur-collecteur relie l'électrode de grille du transistor (91) à effet de champ, reliée par l'intermédiaire d'une branche de courant de résistance à un potentiel de fermeture, au potentiel de référence.

7. Montage suivant la revendication 6,
caractérisé en ce que
les collecteurs des deux transistors (62, 63) de l'amplificateur différentiel (6) sont reliés l'un à l'autre par l'intermédiaire d'un circuit-série RC (64, 65).

8. Montage suivant les revendications 3 et 6,
caractérisé en ce que
l'entrée inverseuse (E-) de l'amplificateur différentiel (6) est reliée par l'intermédiaire d'un condensateur (92) à l'électrode de grille du transistor (91) à effet de champ et une résistance (94) est disposée entre l'entrée inverseuse (E-) et la prise de prélèvement du diviseur (71, 72) de tension se trouvant dans la branche transversale du circuit de courant d'alimentation.
